# EUROPEAN PATENT SPECIFICATION

(11) **EP 2 510 148 B1**
(45) Date of publication and mention of the grant of the patent: **14.08.2013**
(21) Application number: 10787444.8
(22) Date of filing: 06.12.2010
(51) Int. Cl.: C09D 151/00, D06M 13/02, D06M 15/233, D06M 15/285, D06M 23/12, C08F 222/08, D06M 13/192

(54) **USE OF CORE-SHELL PARTICLES FOR ANTI-WICKING APPLICATION OF A YARN OR FABRIC**
VERWENDUNG VON KERNHÜLLENPARTIKEL ZUR BESCHICHTUNG VON GARNEN ODER GEWEBEN
UTILISATION DE PARTICULES DE TYPE COEUR-ENVELOPPE POUR LA PROTECTION DE FIL OU TISSU CONTRE LA PENETRATION CAPILLAIRE

(30) Priority: 09.12.2009 EP 09178500
(43) Date of publication of application: 17.10.2012
(73) Proprietor: Teijin Aramid B.V., 6824 BM Arnhem (NL)
(72) Inventor: AKKER, Peter, Gerard, NL-7006 EB Doetinchem (NL); KWINT, Huibert, Cornelis, NL-3903 WP Veenendaal (NL)
(74) Representative: Heimann, Anette
(86) International application number: PCT/EP2010/068928
(87) International publication number: WO 2011/069941

(56) References cited:
- EP-A2- 0 270 213
- US-A1- 2009 253 828

## Description

The invention pertains to a use of core-shell particles for coating a yarn or fabric to inhibit or prevent wicking water in said yarn or fabric.

Yarns and fabrics that are water-repellent are known. In US 7,132,131, US 5,116,682 and US 4,868,042. Aramid and polyester yarns and fabric have been disclosed that are water-repellent. These patent applications describe a method for producing a hydrophobically finished aramid yarn or fabric by applying a water-repellent agent to the aramid yarn. The water-repellent agent used is one comprising a fluoropolymer, and especially a mixture of fluoroacrylate polymers such as Oleophobol SM® or SL® from Ciba company as described in more detail in US 7,132,131. Since a few years fluoropolymers are suspected compounds that due to their method of manufacture are undesired for environmental reasons. It is therefore important to find alternatives for fluoropolymers, particularly since the production of some of these fluoropolymers may be prohibited for this purpose in the future. Alternatives have been found and have been described in US 2009/253828 and the results have also been presented by D. Stanssens in an overview called "Surface modifications by applying organic nanoparticles from a water dispersion" as could be found on the website of Topchim (www.topchim.be/_img/nanomaterials09.pdf) for some time, but which cannot longer be retrieved.

The present inventors have now found that apart from the water-repellent or hydrophobic properties in general, yarns and fabrics that are treated with such nanoparticles show strong anti-wicking properties for water. The yarns or fabrics so treated thereby become very suitable for products where wicking can be a problem, such as in yarns or fabrics that are used to make anti-ballistic fabrics, boat sails, sun screens or awnings, cabriolet roofs, and tarpaulins. These anti-wicking properties are unrelated to the water-repellent or hydrophobic properties that were already known. Thus yarns or fabrics coated with a water-repellent fluoropolymer do not render strong anti-wicking properties.

To this end the invention relates to the use of core-shell particles with a mean diameter of 10-300 nm and a standard deviation σ of at least 10% of the mean value, and wherein the shell of the core-shell particle comprises a copolymer of vinyl aromatic monomer and maleimide monomer with a glass transition temperature Tg of between 120 and 220 °C for coating a yarn or fabric to inhibit or prevent wicking in said yarn or fabric.

Basic aramid yarn (e.g. Twaron® 1000) shows very hydrophilic behavior and water is absorbed within seconds. Poly(styrene-co-maleimide) (SMI) based finishes are known to improve hydrophobic performance on paper. In the present invention SMI is not applied as such but in the form of core-shell nanoparticles with hydrophobic components in the core. A material covered with very small particles to render an irregular surface, reduces contact areas between liquid and surface. It was now found that in the presence of hydrophobic compounds (e.g. core wax nanoparticles) this results in a super hydrophobic surface where water tends to roll off at only small tilt angles (10-20°). The hydrophobic core-shell particles of the invention cause liquids such as water to have very large contact angles (>90°). The contact angle is the angle at which a liquid (e.g. water) interface meets the solid surface of the particle. Besides, the hydrophobic core-shell particles when present as finish on fiber, demonstrate remarkable non-wicking behavior. Virtually no vertical displacement of water (wicking) could be observed through the yarn bundle for 6 hours. This is exceptionally good for aramid fiber with strong capillary working and clearly outperforming non-wicking as observed for fluoropolymer treatment such as described for aramid fiber in US 7,132,131 and for polyester fiber in US 5,116,682, where up to 1/2" (13 mm) wicking was observed within 2 hours.

It was found that SMI nanoparticles can be used for inhibiting or preventing wicking in yarns or fabrics. For the purpose of the further description SMI means not only specifically poly(styrene-co-maleimide), but also more generically copolymers of vinyl aromatic monomers and maleimide monomers.

Poly(styrene-co-maleimide) is a known polymer. In US 6,407,197 and EP 1405865 the aqueous dispersion has been described of a polymer of vinyl aromatic monomer and maleimide monomer units, obtained by the imidization of a starting polymer which contains vinyl aromatic monomer and maleic anhydride monomer units. Typically, poly(styrene-co-maleic anhydride) (SMA) is a suitable starting polymer for obtaining poly(styrene-co-maleimide) (SMI) upon imidization. SMA can be converted to SMI with, for instance, ammonia. The imidization of SMA and more generally of copolymers of vinyl aromatic monomer and maleic anhydride monomer is a known process and applications with paper and board have been described in various patent applications, such as US 6,407,197, US 6,830,657, WO2004/031249 and US2009/0253828. In WO 2007/014635 pigment particles with SMI at its surface have been described as a coating composition for paper. Suitable SMI-polymers have a glass transition temperature Tg of between 120 and 220 °C, more preferably between 150 and 210 °C.

Core-shell particles with SMI-shell are known and commercially available as NanoTope® 26 PO30, which consists of SMI core-shell particles and has 70 parts palm oil as the core and 30 parts SMI as the shell. Another commercially available product is NanoTope® 26 WA30, which consists of SMI core-shell particles wherein 70 parts paraffin wax make the core and 30 parts SMI make the shell. The SMI layer is very thin (in the nanometer-range) and since the fatty acid tails of the palm oil are capable of penetrating the SMI-outer-layer they thereby contribute to the hydrophobicity of the particles. The core is hydrophobic and can in principle be any oil, paraffin or wax, or a mixture thereof. Paraffin includes alkanes, polyolefins, and terpenes. Oils include vegetable oils, vaseline oils, silicon oils, and paraffin waxes.

Suitable core-shell particles according to the invention are hydrophobic and the additional nano-aspect (i.e. the different sizes of the particles) creates super hydrophobic properties for these SMI-based yarn and fabric finishes. An additional advantage of particles wherein the core is of a material such as palm oil or Castor oil, is the fact that these oils are renewable and bio-degradable, which is advantageous for environmental reasons.

The core-shell particles of the invention have a mean diameter of 10-300 nm, preferably 20-200 nm, and more preferably 25-100 nm. A small particle size distribution is not advantageous in this case. It was found that mixtures of particles of different sizes significantly contribute to the hydrophobicity. If the particles have different sizes, water molecules have more difficulty to attach to the particle, which leads to increased hydrophobicity. For this reason is it advantageous to use particles of which the sizes vary with a standard deviation σ of at least 10% of the mean value, preferably at least 20%, and more preferably at least 30%. Thus as well particles having smaller diameters, as well as particles having larger diameters than the diameter mean value of all particles that are contained in the mixture, which is preferred to obtain the best hydrophobicity. The effect thereby is substantial which even leads to better hydrophobicity than the Ciba fluoropolymers such as Oleophobol SM® or SL®, which up to now were considered the best compounds in this respect. This effect which can be measured as a better than 90° contact angle is called super-hydrophobicity. Contact angles are preferably as high as possible and contact angles better than 100°, better than 115° or even better than 135° can be attained. A large variance of the particle size distribution helps in obtaining large contact angles.

The core-shell particles can in principle have any shape, but spherical, elliptical, and rod shaped particles are preferred for having the smallest contact areas with water molecules.

These above effects relate to the water-repellent properties of yarn or fabric treated with these nanoparticles. Such effect is known as was previously mentioned. Apart from these water-repellent properties it was now found that these yarns or fabrics moreover showed interesting anti-wicking properties. Wicking is a phenomenon where liquid spontaneously rises in a narrow space such as a thin tube, or in porous materials. This effect can cause liquids to flow against the force of gravity. It occurs because of inter-molecular attractive forces between the liquid and solid surrounding surfaces; If the diameter of the tube is sufficiently small, then the combination of surface tension and forces of adhesion between the liquid and container act to lift the liquid. This effect should be prevented in yarn or fabric that is in contact with water, such as in contact with rain. Particularly, wicking of water should be prevented in boat sails, but also in sun screens or awnings, cabriolet roofs, tarpaulins, soft and hard ballistic materials including bullet resistant vests, and the like.

The core-shell particles have fairly good cohesion with each other once dried. Also the adhesion with the yarn or fabric is good. In order to improve the cohesion further, binders or film-formers may be added such as SBR latex and polyacrylates, or combinations of binders. Other additives might also be added to the final core shell particles dispersion, such as anti-static additives, dyes and colorants. Anti-static additives might be of specific importance for processing yarn during winding and weaving, typically these additives are effective already at 0.1-0.5 wt% on yarn base. Non encapsulated ('free') hydrophobic additives, such as waxes, may be added in small amounts to the core-shell particle dispersion in order to boost the hydrophobicity.

Water insoluble ingredients can be added prior to imidization and are then included in the core-shell particles during imidization. Preferably, the active ingredients have an affinity with the core material. Examples of active ingredients include dyes; colorants and UV-absorbers.

The fabric that can be used for treatment with the core-shell nanoparticles can be a woven or non-woven fabric. Non-woven fabrics include yarns that are contained in an adhesive layer between two foils (for instance polyester foils), which are commonly used for high-performance boat sails. In other constructions woven fabrics may be applied, such as sail cloth with a weave of warp and weft threads. For instance, these threads lay transverse to one another, with the warp being the thread more capable of bearing the stresses than the weft, or these threads alternate convergent and divergent in course longitudinal direction runs and another group of threads moving in opposite directions to the first group divergent and convergent in course longitudinal direction itself extended.

The continuous yarn or fabric provided with the hydrophobic core-shell particles coating can be used in applications where anti-wicking properties are required, such as in soft and hard ballistic materials including bullet resistant vests, hard ballistic panels, UD's, and helmets. The treated continuous yarn or fabric are preferably used in sail-like materials such as used for boat sails, tarpaulins, sun screens, awnings, and cabriolet roofs. Another application may be a ripcord especially a ripcord for optical fibers or for power cables. The yarns or fabrics thus treated do not have water wicking properties and are therefore extremely suitable for use in humid environments where the fibrous product must dry as quickly as possible, such as ground cables in which longitudinal water transport (wicking) should be prevented by all means. The treated yarn or fabric can therefore also be used in reinforcement of pipes, hoses, and cables, such as oil pipes for off-shore applications, rubber hoses and optical fiber cables.

These yarns can be made to fabrics in the common way to make fabrics from yarns by using weaving technology. Alternatively, not the continuous yarn is treated with the core-shell particles, but regular, non-treated yarn is woven to a fabric and the fabric is then treated with the particles. The yarns and fabrics that can be treated are preferably aramid yarns and fabrics, most preferably para-aramid such as Twaron®, but other yarns and fabrics such as made of nylon, polyester, glass, carbon, or polyolefin can also be used.

The yarn or fabric can be treated on standard equipment. The yarn is commonly brought into contact in a bath or by kiss rolls or slit applicators with a dispersion of the core-shell particle. Typical yarn speeds are 10 to 700 m/min, more preferably 25-500 m/min. The yarn or fabric can be treated by means of a bath (or any other commonly used application technique) containing a dispersion of the core-shell particle.

Typical amounts of core-shell particles on the yarn or fabric are 0.1 to 20% by weight, preferably 0.5 to 10% by weight, more preferably 1 to 5% by weight, based on the yarn or fabric weight. After application of the core-shell particles, the yarn or fabric is dried, preferably by heating in an oven, typically at a temperature between 120 and 200 °C with residence times typically between 9 and15 seconds for yarns and 0.5 to 10 minutes for fabric.

In a particularly preferred embodiment the yarns that are used to make the fabric are first treated with a finish comprising a diglyceride or a triglyceride obtained from glycerol that is esterified with saturated or unsaturated fatty acids with 6-20 carbon atoms, more preferably with a di- or triglyceride wherein the fatty acid is fatty coconut oil, which is a mixture of saturated and unsaturated C6-C18 fatty acids. This finished product is then coated with the core-shell nanoparticles. Thus obtained yarns or fabrics are novel and possess further improved anti-wicking properties.

The invention is further illustrated by the following non-limitative examples.

### General

### Dynamic Contact Angle Analyzer (hydrophobicity) for yarns:

The contact angle is directly measured on the yarn or fabric, by the static sessile drop method. In case a yarn is measured, at least 100 m has been wound upon a small bobbin with an outer diameter of 52 mm. The contact angle is measured by a FTA188 Dynamic Contact Angle Analyzer (First Ten Angstrom) that is using an optical subsystem to capture the profile of the water droplet on yarn or fabric. The angle formed between the liquid/solid interface and the liquid/vapor interface is the contact angle, and is measured by employing a GW-902H (GenWac) video device and a Telecentric lens with a factory calibration of 11075 nanometers per pixel (horizontal field of view is about 8 mm). FTA32 software has been used to capture and analyze the contact angle. Water (puriss. p.a.) for inorganic trace analysis (Fluka) is used as dropping liquid. The contact angle is measured at least 50 times within 20 seconds. The Young's equation expresses the equilibrium situation: γ_{SV-} γ_{LS}=γ_{LV} cos θ, where V=vapor, L=liquid, S=Solid, γ=surface tension, and θ=equilibrium contact angle.

### Water Wicking Test Method:

The water wicking of a coated strand can be determined by the Bellcore water wicking test No. TR-NWT-00492 (a test method of AT&T), which is widely known in the telecommunication wire industry (see US 6,051,315). This method was slightly modified and made workable for yarn bundles (instead of telecommunication wires). The water wicking of a finished yarn bundle can be determined by the following method, which herein is to be referred to as the 'Water Wicking Test Method'. Approximately 1 liter of aqueous solution including a dye indicator is placed in a suitable glass container, such as a 2000 mL conventional beaker which is commercially available from Fisher Scientific. The beaker should have an inner diameter of approximately 120-130 mm and the final height of the dye solution in the beaker is 76 mm (3 inch). Preferably, the dye is Solophenyl® Red 3BC (ex Huntsman), 0.1 wt% in water.

Three samples of the finished yarn bundle connected to a movable crossbar are submerged into the solution with a lead sinker weight of approximately 25 g per bundle in order to apply sufficient tension, such that about 25 mm (1 inch) of the yarn bundle is below the surface of the solution and about 435 mm (17 inch) is above the surface. A minimum distance between the yarn bundles is at least 13 mm (0.5 inch). A standard laboratory filter paper (589² White ribbon, ashless from Schleicher & Schuell GmbH) is cut into a square format with a scissor and placed 25 mm (1 inch) above the solution, carefully mounted on the yarn bundle with a paperclip. The wicking test should be conducted at room temperature (about 25 °C) for 6 hours. Under such test conditions, the yarn bundle is considered 'non-wicking' if the dye solution does not wick and wet the lower edge of the filter paper within six hours. In case of non-wicking yarn the covered transport distance upwards in mm is also measured in order to discriminate between samples.

### Example 1

NanoTope® 26WA30, a 50 wt% dispersion in water of core shell particles of poly(styrene-co-maleimide) with a paraffin wax filling was supplied by Topchim N.V., Belgium. The dispersion was diluted to 8 wt% with demi-water prior to application with a ceramic slit applicator from Rauschert. A Twaron® 2200 yarn 1610f1000 (1610dtex/1000 filaments) without (processing) spin finish AT81 was finished with 2.4 wt% (on yarn based) NanoTope® 26 WA30 at 75 m/min yarn speed at several temperatures (Tₒᵥₑₙ) and oven residence times (see Table 1). All yarn temperatures (T_{yarn}) were manually measured with an IR/laser temperature gun, approximately 8 cm behind the yarn exit of the hot-air oven (see Table 1). The resulting contact angles of water were measured for 20 seconds with a FTA188 Dynamic Contact Angle Analyzer. Results are given in Table 1. Stable contact angles of 125-130° were measured for a large range of drying temperatures, indicating a stable and very high hydrophobicity. The results also prove that the final contact angle is not dependent on variations in drying temperature and residence time in the tested ranges, which is advantageous for large-scale production.

**Table 1. Contact angles of 2.4 wt% NanoTope® 26WA30 as the result of different drying conditions.**

| Sample | Finish wt% on yarn base Twaron® 2200 1610f1000 | Tₒᵥₑₙ (°C) | T_{yarn} (°C) | Oven time (s) | contact angle H₂O for 20s (°) |
|---|---|---|---|---|---|
| 1 | 2.4% NanoTope® 26 WA30 | 120 | 114 | 9.6 | 125-130 |
| 2 | 2.4% NanoTope® 26 WA30 | 140 | 133 | 9.6 | 130 |
| 3 | 2.4% NanoTope® 26 WA30 | 160 | 154 | 9.6 | 130 |
| 4 | 2.4% NanoTope® 26 WA30 | 180 | 175 | 9.6 | 130 |
| 5 | 2.4% NanoTope® 26 WA30 | 200 | 191 | 9.6 | 130 |
| 7 | 2.4% NanoTope® 26 WA30 | 120 | 116 | 14.4 | 130 |
| 8 | 2.4% NanoTope® 26 WA30 | 180 | 175 | 14.4 | 125-130 |

The water wicking test was performed with three of the finished yarn samples of sample 4 resulting in zero upward vertical displacement of the dye solution in six hours, proving 100% non-wicking behavior, which was not observed with fluoropolymer (Oleophobol®) treated Twaron 2000 (930 dtex f1000) yarns as described in US 7,132,131 (these yarns are not considered as non-wicking, since they have 25 mm transport within 1 minute, which is comparable to standard Twaron® 1000 1680f1000).

### Example 2

NanoTope® 26PO30, a 66 wt% dispersion in water of core shell particles of poly(styrene-co-maleimide) with a palm oil filling was supplied by Topchim N.V., Belgium. The dispersion was diluted to 5 wt% with demi-water prior to application with a ceramic slit applicator from Rauschert. A Twaron® 2200 1610f1000 yarn (1610dtex/1000 filaments) without (processing) spin finish AT81 was finished with 2 wt% (on yarn based) NanoTope® 26 PO30 at 75 m/min yarn speed with drying conditions set at 180 °C and 10 s oven residence time. The resulting contact angles of water were measured for 20 seconds with a FTA188 Dynamic Contact Angle Analyzer. A stable contact angle of 120° was measured, indicating a stable and very high hydrophobicity.

The water wicking test was performed with three of the finished yarn samples resulting in 5 mm upward vertical displacement of the dye solution in six hours, proving non-wicking behavior, which was not observed with fluoropolymer (Oleophobol®) treated Twaron 2000 (930 dtex f1000) yarns as described in US 7,132,131 (these yarns are not considered as non-wicking, since they have 25 mm transport within 1 minute, which is comparable to standard Twaron® 1000).

## Claims

1. Use of core-shell particles with a mean diameter of 10-300 nm and a standard deviation σ of at least 10% of the mean value, and wherein the shell of the core-shell particle comprises a copolymer of vinyl aromatic monomer and maleimide monomer with a glass transition temperature Tg of between 120 and 220 °C for coating a yarn or fabric to inhibit or prevent wicking water in said yarn or fabric.

2. The use according to claim 1 wherein the core-shell particles have a mean diameter of 20 to 200 nm, preferably 25 to 100 nm.

3. The use according to claim 1 or 2 wherein the standard deviation σ is at least 20%, preferably at least 30% of the mean value.

4. The use according to any one of claims 1-3 wherein the core-shell particles have a spherical, elliptical or rod shape.

5. The use according to any one of claims 1-4 wherein the core of the core-shell particle is a hydrophobic material comprising a wax, paraffin, or oil.

6. The use according to any one of claims 1-5 wherein the shell of the core-shell particle is poly(styrene-co-maleimide).

7. The use according to any one of claims 1-6 wherein the yarn or fabric is aramid, nylon, polyester, glass, carbon, or polyolefin.

8. The use according to any one of claims 1-7 wherein the fabric is a woven or non-woven.

9. The use according to any one of claims 1-8 wherein the yarn or fabric is provided with a finish and the core-shell particles are coated thereon.

10. The use according to claim 9 wherein the finish comprises a diglyceride or a triglyceride obtained from glycerol that is esterified with saturated or unsaturated fatty acids with 6-20 carbon atoms.

11. The use according to any one of claims 1-10 wherein the yarn or fabric is a material comprised in a boat sail, a sun screen or awning, a cabriolet roof, a ballistic material, a ripcord especially for optical fibers or for power cables, or a tarpaulin.

## Patentansprüche

1. Verwendung von Kern-Mantel-Partikeln mit einem mittleren Durchmesser von 10 bis 300 nm und einer Standardabweichung σ von mindestens 10 % des Mittelwerts, wobei der Mantel des Kern-Mantel-Partikels ein Copolymer aus einem aromatischen Vinylmonomer und einem Maleimid-Monomer mit einer Glasübergangstemperatur Tg zwischen 120 und 220 °C umfasst zum Beschichten eines Garns oder Stoffs zum Hemmen oder Verhindern des Aufsaugens von Wasser in dem Garn oder Stoff.

2. Verwendung nach Anspruch 1, wobei die Kern-Mantel-Partikel einen mittleren Durchmesser von 20 bis 200 nm, vorzugsweise 25 bis 100 nm aufweisen.

3. Verwendung nach Anspruch 1 oder 2, wobei die Standardabweichung σ mindestens 20 %, vorzugsweise mindestens 30 % des Mittelwerts beträgt.

4. Verwendung nach einem der Ansprüche 1 - 3, wobei die Kern-Mantel-Partikel rund, elliptisch oder stabförmig sind.

5. Verwendung nach einem der Ansprüche 1 - 4, wobei der Kern des Kern-Mantel-Partikels ein hydrophobes Material ist, welches ein Wachs, Paraffin oder Öl umfasst.

6. Verwendung nach einem der Ansprüche 1 - 5, wobei der Mantel des Kern-Mantel-Partikels Poly(styrol-co-maleimid) ist.

7. Verwendung nach einem der Ansprüche 1 - 6, wobei das Garn oder der Stoff Aramid, Nylon, Polyester, Glas, Kohlenstoff oder Polyolefin ist.

8. Verwendung nach einem der Ansprüche 1 - 7 , wobei der Stoff ein Gewebe oder Vlies ist.

9. Verwendung nach einem der Ansprüche 1 - 8, wobei der Garn oder Stoff mit einer Ausrüstung versehen ist und die Kern-Mantel-Partikel als Schicht darauf aufgebracht sind.

10. Verwendung nach Anspruch 9, wobei die Ausrüstung ein Diglycerid oder ein Triglycerid umfasst, das aus Glycerin gewonnen wird, das mit gesättigten oder ungesättigten Fettsäuren mit 6 - 20 Kohlenstoffatomen verestert ist.

11. Verwendung nach einem der Ansprüche 1 - 10, wobei das Garn oder der Stoff ein Material ist, das in einem Bootssegel, einem Sonnenschutz oder -segel, einem Cabriolet-Dach, einem ballistischen Material, einer Reißleine insbesondere für Lichtwellenleiter oder für Stromkabel oder einer Plane enthalten ist.

## Revendications

1. Utilisation de particules de type noyau-coque présentant un diamètre moyen de 10 à 300 nm, affecté d'un écart-type σ d'au moins 10 % de la valeur moyenne, dans lesquelles particules noyau-coque la coque comprend un copolymère d'un monomère vinyl-aromatique et d'un monomère de type maléimide, présentant une température de transition vitreuse située entre 120 et 220 °C, pour en revêtir un fil ou une étoffe afin d'inhiber ou d'empêcher l'imbibition par de l'eau dudit fil ou de ladite étoffe.

2. Utilisation conforme à la revendication 1, pour laquelle les particules noyau-coque présentent un diamètre moyen de 20 à 200 nm, et de préférence de 25 à 100 nm.

3. Utilisation conforme à la revendication 1 ou 2, pour laquelle l'écart-type σ est d'au moins 20 %, et de préférence d'au moins 30 %, de la valeur moyenne.

4. Utilisation conforme à l'une des revendications 1 à 3, pour laquelle les particules noyau-coque ont la forme d'une sphère, d'un ellipsoïde ou d'un bâtonnet.

5. Utilisation conforme à l'une des revendications 1 à 4, pour laquelle le noyau des particules noyau-coque est fait d'un matériau hydrophobe comprenant une cire, une paraffine ou une huile.

6. Utilisation conforme à l'une des revendications 1 à 5, pour laquelle la coque des particules noyau-coque est faite d'un copolymère poly(styrène-co-maléimide).

7. Utilisation conforme à l'une des revendications 1 à 6, dans laquelle le fil ou l'étoffe est en aramide, en nylon, en polyester, en verre, en carbone ou en polyoléfine.

8. Utilisation conforme à l'une des revendications 1 à 7, dans laquelle l'étoffe est un tissu ou un non-tissé.

9. Utilisation conforme à l'une des revendications 1 à 8, dans laquelle le fil ou l'étoffe est muni(e) d'un apprêt par-dessus lequel les particules noyau-coque sont déposées en revêtement.

10. Utilisation conforme à la revendication 9, dans laquelle l'apprêt comprend un diglycéride ou un triglycéride, obtenu par estérification du glycérol au moyen d'acides gras saturés ou insaturés comportant de 6 à 20 atomes de carbone.

11. Utilisation conforme à l'une des revendications 1 à 10, dans laquelle le fil ou l'étoffe est un matériau inclus dans une voile de bateau, un écran ou auvent pare-soleil, un toit de cabriolet, un tissu balistique, un cordon déclencheur, en particulier pour fibres optiques ou pour câbles de puissance, ou une bâche goudronnée.
